# EUROPEAN PATENT SPECIFICATION

(11) **EP 4 056 424 B1**
(45) Date of publication and mention of the grant of the patent: **16.08.2023**
(21) Application number: 22174804.9
(22) Date of filing: 23.05.2022
(51) Int. Cl.: G06F 3/16, G10L 21/0208, H04L 67/12

(54) **AUDIO SIGNAL PLAYBACK DELAY ESTIMATION FOR SMART REARVIEW MIRROR**
VERZÖGERUNGSSCHÄTZUNG FÜR EINEN INTELLIGENTEN RÜCKSPIEGEL BEI DER WIEDERGABE VON AUDIOSIGNALEN
ESTIMATION DE DÉLAI DE LECTURE D'UN SIGNAL AUDIO POUR RÉTROVISEUR INTELLIGENT

(30) Priority: 26.05.2021 CN 202110580241
(43) Date of publication of application: 14.09.2022
(73) Proprietor: Apollo Intelligent Connectivity (Beijing) Technology Co., Ltd., Beijing 100176 (CN)
(72) Inventor: LIU, Rong, Beijing, 100176 (CN)
(74) Representative: Maiwald GmbH

(56) References cited:
- WO-A1-2017/114232
- CN-A- 107 734 378
- CN-A- 111 402 868

## Description

### TECHNICAL FIELD

The disclosure relates to a field of artificial intelligence technology, specifically fields of Internet of Vehicles and automatic driving, in particular to a delay estimation method for a smart rearview mirror, a delay estimation apparatus for a smart rearview mirror, and an electronic device.

### BACKGROUND

Smart rearview mirror can transmit sound to an external device for playback through screen projection technology. However, there is often a certain delay in audio playback due to a large amount of data transmission. In consideration of limitations of noise reduction chips, existing signal processing technologies cannot be applied to a case of unconventional delay (> 40 ms), which causes a negative impact on processing voice signals.

In this way, the smart rearview mirror introduces a delay estimation algorithm, to solve the problem of the audio playback delay by calculating the delay. In order to not affect the overall experience, the delay estimation algorithm sets a small upper limit (such as 1000 ms) to limit the calculation result within a small range. The small upper limit means the time that the algorithm converges is short. If a real delay is within this range, the final signal processing effect will be good. It can be seen that the delay estimation upper limit directly affects the calculation result of the delay estimating algorithm and the final signal processing effect.

CN 111402868 A relates to a voice recognition method, including performing a latency estimation according to a first microphone signal and a first reference signal in a preset time period to obtain a latency value, acquiring a system audio signal, and processing the system audio signal by using the latency value to obtain a second reference signal; performing de-noising processing on a collected second microphone signal according to the second reference signal, to obtain a to-be-recognized voice signal, and performing recognition on the to-be-recognized voice signal.

### SUMMARY

Objects of the present invention are a delay estimation method for a smart rearview mirror according to independent claim 1, a delay estimation apparatus for a smart rearview mirror according to independent claim 6, a non-transitory computer-readable storage medium according to independent claim 11, and a computer program product according to independent claim 12. Preferred embodiments of the present invention are defined by the dependent claims.

With the technical solution of the disclosure, according to the identification information of the external device connected to the smart rearview mirror, the delay estimation upper limit used in the delay estimation algorithm can be flexibly set, which is not a default value uniformly set. Therefore, a problem that the delay estimation upper limit does not match the performance of the external device in the delay estimating algorithm with the fixed delay estimation upper limit in the related art is solved. Further, the disclosure solves a problem that for an external device having a good performance, the convergence of the delay estimation algorithm is slow, the noise reduction effect is achieved slowly, and the voice interaction experience after the device connection is deteriorated, and for an external device having a poor performance, the delay estimation range is too small, the delay estimation algorithm cannot obtain a suitable delay within this range, there are jumps between several delays, the calculation of the noise reduction algorithm and the voice interaction process are affected by uniformly changing the upper limit. With the technical solution according to the disclosure realizes, proper target delay estimation upper limits are set for different external devices, and the delay estimation is performed on the basis of the target delay estimation upper limit matched to the external device. In this way, the delay estimation result obtained through the algorithm is accurate, and the video playback effect of the external device is improved.

It is to be understood that the content described in this section is not intended to identify key or important features of embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure.
FIG. 1 is a flowchart illustrating a delay estimation method for a smart rearview mirror according to an embodiment of the disclosure.
FIG. 2 is a flowchart illustrating a method for determining a target delay estimation upper limit corresponding to an external device according to an embodiment of the disclosure.
FIG. 3 is a flowchart illustrating a method for determining a target delay transmission upper limit corresponding to an external device according to another embodiment of the disclosure.
FIG. 4 is a flowchart illustrating a delay estimation method for a smart rearview mirror according to another embodiment of the disclosure.
FIG. 5 is a block diagram illustrating a delay estimation apparatus for a smart rearview mirror according to an embodiment of the disclosure.
FIG. 6 is a block diagram illustrating a delay estimation apparatus for a smart rearview mirror according to another embodiment of the disclosure.
FIG. 7 is a block diagram illustrating a delay estimation apparatus for a smart rearview mirror according to still another embodiment of the disclosure.
FIG. 8 is a block diagram illustrating an electronic device for implementing a delay estimation method for a smart rearview mirror according to an embodiment of the disclosure.

### DETAILED DESCRIPTION

The following describes the embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein as long as they are encompassed by the scope of the invention as defined by the appended claims. For clarity and conciseness, descriptions of well-known functions and structures are omitted in the following description.

In the related art, a delay estimation algorithm based on a fixed delay estimation upper limit is used to solve the problem of audio delay in the process of transmitting the audio by the smart rearview mirror to an external device. The upper limit of the calculation result of the delay estimation algorithm is a small to limit the calculation result within a small range. The time delay is calculated within this range, and delay processing of the voice signals is performed .

However, since the external devices that support the screen projection function have different performances, the actual transmission delays are different greatly. The fixed upper limit cannot change in real time according to the performance of the external device. If the fixed upper limit is uniformly increased for all external devices, the delay estimation range is too large for an external device with a good performance, and the algorithm converges slowly, the noise reduction effect is achieved slowly, and the voice interaction experience after establishing the connection is deteriorated. If the upper limit value is uniformly decreased for all external devices, the delay estimation range is too small for an external device with a poor performance, the algorithm cannot obtain a suitable delay value within this range, and there may be jumps between several delay values, which seriously affects the calculation of the noise reduction algorithm and the voice interaction process.

In view of the above, the disclosure provides a method for delay estimation of a smart rearview mirror, an apparatus for delay estimation of a smart rearview mirror and an electronic device. The delay estimation can be configured based on an external device in real time. In detail, the method, the apparatus, and the electronic device will be described below with reference to the accompanying drawings.

It is to be noted that the external device mentioned in the disclosure may be a physical device that can receive the screen projection content of the smart rearview mirror. As an example, the external device may be a mobile terminal, such as a smart phone, a tablet computer, a device having an augmented reality (AR) function, or a device having a virtual reality (VR) function. As another example, the external device can be a vehicle computer system. The vehicle computer system refers to all on-vehicle information and entertainment product. The vehicle computer system can realize the information communication between the user and the vehicle, and between the vehicle and the outside (e.g., between vehicles). The smart rearview mirror mentioned in the disclosure can be connected to the external device through the screen projection technology. The specific technology and specific form of the external device are not limited in embodiments of the disclosure.

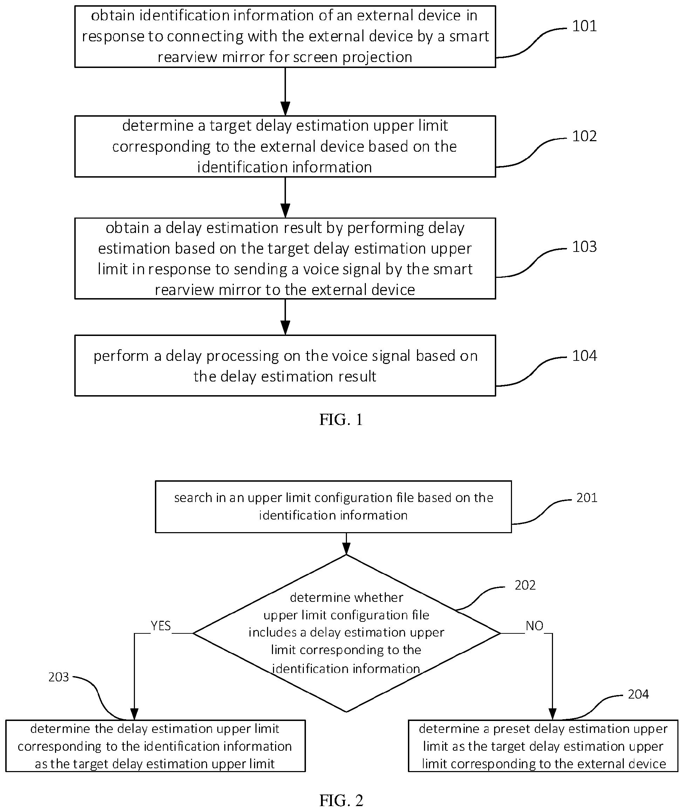

FIG. 1 is a flowchart illustrating a delay estimation method for a smart rearview mirror according to an embodiment of the disclosure. It is to be noted that the delay estimation method according to the embodiments of the disclosure can be applied to a delay estimation apparatus for a smart rearview mirror according to the embodiments of the disclosure. The delay estimation apparatus can be installed on an electronic device. For example, the electronic device is a smart rearview mirror installed on a vehicle.

As illustrated in FIG. 1, the delay estimation method includes the following.

In 101, identification information of an external device is obtained in response to connecting with the external device through a screen projection technology.

It is to be noted that the identification information may be a channel number of the external device, or may be other identifiers that can be used to uniquely identify the external device, which is not specifically limited in the disclosure.

In the embodiments of the disclosure, the external device may be a vehicle computer system.

For example, when a smart rearview mirror is connected to an external device through the screen projection technology, the channel number of the external device can be obtained by sending a request to the external device. The channel number can uniquely identify the external device.

In 102, a target delay estimation upper limit corresponding to the external device is determined based on the identification information.

The above-mentioned target delay estimation upper limit corresponding to the external device is determined by performing a search in an upper limit configuration file based on the identification information.

After the identification information of the external device is obtained, the smart rearview mirror performs a search in the upper limit configuration file based on the identification information, to determine whether there is a delay estimation upper limit corresponding to the identification information of the external device in the upper limit configuration file. In a case that there is the delay estimation upper limit corresponding to the identification information of the external device in the upper limit configuration file, the delay estimation upper limit corresponding to the identification information of the external device is determined as the target delay estimation upper limit. In a case that there is no delay estimation upper limit corresponding to the identification information of the external device in the upper limit configuration file, a preset delay estimation upper limit is determined as the target delay estimation upper limit corresponding to the external device.

In 103, a delay estimation is performed based on the target delay estimation upper limit in response to sending a voice signal by the smart rearview mirror to the external device.

When the smart rearview mirror is connected to the external device for screen projection and the voice data of the smart rearview mirror is transmitted to the external device, the smart rearview mirror performs a delay processing on the transmitted voice data to affect the audio playback effect of the external device. In order to solve the problem of the audio playback delay, the smart rearview mirror introduces the delay estimation algorithm which determines the target delay estimation upper limit suitable for the external device based on the identification information in response to sending the voice signals to the external device to perform the delay calculation, such that the obtained delay estimation result can well adapt to the performance of the external device.

In 104, a delay processing is performed on the voice signal based on the delay estimation result.

After the delay estimation is performed based on the target delay estimation upper limit to obtain the delay estimation result, the delay processing is performed on the voice signal transmitted by the smart rearview mirror to the external device according to the delay estimation result. With the delay estimation method for a smart rearview mirror according to the embodiments of the disclosure, the voice signal obtained after the delay processing can be accurate and fast.

With the delay estimation method for a smart rearview mirror according to embodiments of the disclosure, the identification information of the external device is obtained in response to connecting with the external device for screen projection. The target delay estimation upper limit corresponding to the external device is determined based on the identification information. The delay estimation result is obtained by performing the delay estimation based on the target delay estimation upper limit in response to sending the voice signal by the smart rearview mirror to the external device. The voice signal sent by the smart rearview mirror to the external device is processed based on the delay estimation result. Therefore, a suitable target delay estimation upper limit is determined for each external device, and the delay estimation is performed on the basis of the target delay estimation upper limit matching the external device. The delay estimation result obtained by the delay estimation algorithm is accurate, and the audio playback effect of the external device is optimized.

For rapidly and accurately determining the target delay estimation upper limit corresponding to the external device according to the identification information of the external device to improve the accuracy of the delay estimation result, in some embodiments of the disclosure, as illustrated in FIG. 2, determining the target delay estimation upper limit corresponding to the external device according to the identification information includes the following.

In 201, a search is performed in an upper limit configuration file based on the identification information.

The upper limit configuration file includes a correspondence between identification information and delay estimation upper limits.

In 202, it is determined whether there is a delay estimation upper limit corresponding to the identification information of the external device in the upper limit configuration file. In a case that there is the delay estimation upper limit corresponding to the identification information of the external device in the upper limit configuration file, the block 203 is executed. In a case that there is no delay estimation upper limit corresponding to the identification information of the external device in the upper limit configuration file, the block 204 is executed.

In 203, the delay estimation upper limit corresponding to the identification information of the external device is determined as the target delay estimation upper limit.

In a case that there is a delay estimation upper limit corresponding to the identification information of the external device in the upper limit configuration file, it means that there is the delay estimation upper limit suitable for the external device in the upper limit configuration file. Therefore, the delay estimation result is accurate without setting the delay estimation upper limit in advance.

In 204, a preset delay estimation upper limit is determined as the target delay estimation upper limit corresponding to the external device.

In a case to that there is no delay estimation upper limit corresponding to the identification information of the external device in the upper limit configuration file, it means that there is no delay estimation upper limit suitable for the external device in the upper limit configuration file, such that the preset delay estimation upper limit is determined as the target delay estimation upper limit corresponding to the external device.

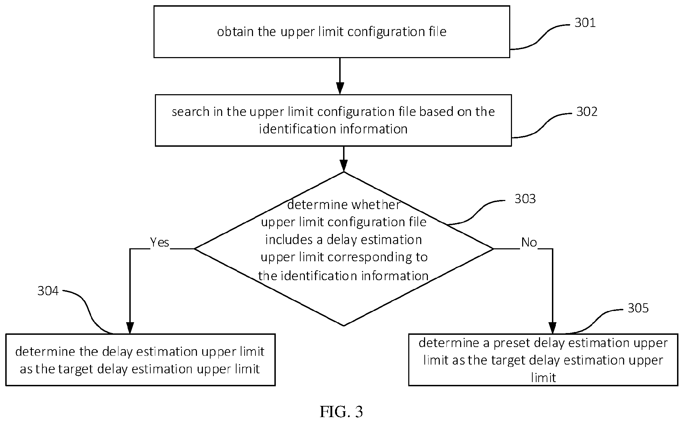

Before performing a search in the upper limit configuration file based on the identification information, the upper limit configuration file needs to be obtained in advance. As illustrated in FIG. 3, determining the target delay estimation upper limit corresponding to the external device based on the identification information may include the following.

In 301, the upper limit configuration file is obtained.

The upper limit configuration file can be obtained through various methods. In an example, when the smart rearview mirror is connected to the external device for screen projection, the smart rearview mirror sends a network request to a server and receives the upper limit configuration file sent by the server based on the network request.

There can be various methods of requesting the upper limit configuration file from the server. In a possible implementation, every time the smart rearview mirror sends the request to the server, the smart rearview mirror requests to download the latest upper limit configuration file from the server. In another possible implementation, a version number is carried in the network request. After the server receives the network request, the server perform the matching between the version number in the network request and the latest version number (or the highest version number, the largest version number) of the upper limit configuration file stored by the server itself, to determine whether the upper limit configuration file stored in the smart rearview mirror is the latest version. If the version number in the network request is different from the latest version number (or the highest version number, or the largest version number) of the upper limit configuration file stored by the server itself, it is considered that the version of the upper limit configuration file stored in the smart rearview mirror is not the latest version. In this case, the latest version needs to be obtained from the server. Otherwise, there is no need to download the latest version from the server and the upper limit configuration file stored in the smart rearview mirror can be used directly.

The upper limit configuration file can be obtained through other methods. The upper limit configuration file is obtained from a local storage module of the smart rearview mirror. The upper limit configuration file is the latest upper limit configuration file requested from the server by the smart rearview mirror. The latest upper limit configuration file may be the upper limit configuration file sent by the server based on the request at the last time when the smart rearview mirror was connected to the external device for screen projection. As another example, the latest upper limit configuration file may be the upper limit configuration file sent by the server based on the request periodically sent from the smart rearview mirror.

In 302, a search is performed in the upper limit configuration file based on the identification information.

The block 302 may be implemented in any method described in embodiments of the disclosure, which is not limited and is not repeated.

In 303, it is determined whether there is a delay estimation upper limit corresponding to the identification information of the external device in the upper limit configuration file. In a case that there is a delay estimation upper limit corresponding to the identification information of the external device in the upper limit configuration file, the block 304 is executed. In a case that there is no delay estimation upper limit corresponding to the identification information of the external device in the upper limit configuration file, the block 305 is executed.

In 304, the delay estimation upper limit corresponding to the identification information of the external device is determined as the target delay estimation upper limit.

The block 304 may be implemented through any method described in embodiments of the disclosure, which is not limited and is not repeated.

In 305, a preset delay estimation upper limit is determined as the target delay estimation upper limit corresponding to the external device.

The block 305 may be implemented through any method described in embodiments of the disclosure, which is not limited and is not repeated.

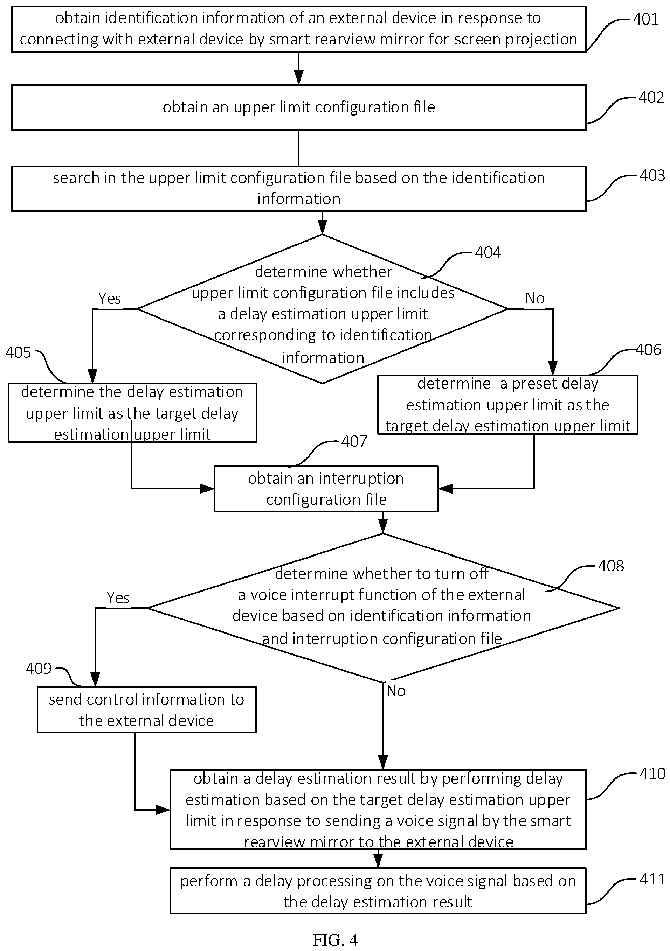

In order to further improve the user's experience of using the screen projection, for an external device having a poor performance, in the case of using the delay estimation method according to disclosure, the voice interrupt function can be turned off, to prevent the delay value from exceeding the upper limit of the algorithm (for example, 2500 ms) due to a complex scene of playing the audio sent from the smart rearview mirror to the external device for screen projection or prevent the algorithm from unconverging duo to serious jitters, during the Text To Speech (TTS) broadcast. As illustrated in FIG. 4, the delay estimation method for a smart rearview mirror includes the following.

In 401, identification information of the external device is obtained in response to connecting to the external device by a smart rearview mirror for screen projection.

The block 401 is implemented through any method described in embodiments of the disclosure, which is not limited and not repeated.

In 402, an upper limit configuration file is obtained.

The block 402 may be implemented through any method described in embodiments of the disclosure, which is not limited and not repeated.

In 403, a search is performed in the upper limit configuration file based on the identification information.

The upper limit configuration file includes a correspondence between identification information and delay estimation upper limits.

In 404, it is determined whether there is a delay estimation upper limit corresponding to the identification information of the external device in the upper limit configuration file. In a case that there is a delay estimation upper limit corresponding to the identification information of the external device in the upper limit configuration file, the block 405 is executed. In a case that there is no delay estimation upper limit corresponding to the identification information of the external device in the upper limit configuration file, the block 406 is executed.

In block 405, the delay estimation upper limit corresponding to the identification information of the external device is determined as the target delay estimation upper limit.

In the case that there is a delay estimation upper limit corresponding to the identification information of the external device in the upper limit configuration file, it means that there is a delay estimation upper limit suitable for the external device in the upper limit configuration file, such that the delay estimation result is accurate without setting a delay estimation upper limit in advance.

In 406, a preset delay estimation upper limit is determined as the target delay estimation upper limit corresponding to the external device.

In the case that there is no delay estimation upper limit corresponding to the identification information of the external device in the upper limit configuration file, it means that there is no delay estimation upper limit suitable for the external device in the upper limit configuration file, such that the preset delay estimation upper limit is determined as the target delay estimation upper limit corresponding to the external device.

In 407, an interruption configuration file is obtained. The interruption configuration file includes a correspondence between the identification information and voice interrupt function configuration information.

The interruption configuration file can be obtained through various methods. In an example, when the smart rearview mirror is connected to the external device for screen projection, the smart rearview mirror sends the network request to the server and receives the interruption configuration file sent by the server based on the network request.

There can be various methods of requesting the interruption configuration file from the server. In a possible implementation, every time the smart rearview mirror sends the request, the latest interruption configuration file is downloaded from the server. In another possible implementation, a version number is carried in the network request. After the server receives the network request, the server performs the matching between the version number in the network request and the latest version number (or the highest version number, or the largest version number) of the interruption configuration file stored by the server itself to determine whether the interruption configuration file stored in the smart rearview mirror is the latest version. If the version number in the network request is different from the latest version number (or the highest version number, or the largest version number) of the interruption configuration file stored by the server itself, it means that the version of the interruption configuration file stored in the smart rearview mirror is not the latest version. In this case, the latest version needs to be obtained from the serve. Otherwise, there is no need to download the latest version from the serve. The interruption configuration file stored in the smart rearview mirror can be used directly.

The interruption configuration file can be implemented by other methods. The interruption configuration file is obtained from the local storage module of the smart rearview mirror. The interruption configuration file is the interruption configuration file requested by the smart rearview mirror from the server last time. The latest interrupt configuration file may be the interruption configuration file sent by the server at the last time when the smart rearview mirror was connected to the external device for screen projection. As another example, the latest interruption configuration file may be the configuration file sent by the server based on the request sent periodically by the smart rearview mirror to the server.

In 408, it is determined whether to turn off the voice interrupt function of the external device based on the identification information and the interruption configuration file. In a case of determining to turn off the voice interrupt function of the external device, the block 409 is executed. In a case of determining not to turn off the voice interrupt function of the external device, the block 410 is executed.

In 409, control information is sent to the external device. The control information is configured to instruct the external device to turn off the voice interrupt function.

When the interruption configuration file indicates to turn off the voice interrupt function of the external device corresponding to the identification information, it means that the voice interruption function may affect the delay estimation calculation of the smart rearview mirror, which leads to the delay value exceeding the upper limit of the algorithm (for example, 2500 ms) or incapability of converging due to serious jitters, such that a suitable delay value cannot be calculated. Therefore, the control information is sent to the external device to turn off the voice interrupt function of the external device, such that the delay estimation result of the delay estimation algorithm is accurate, and the final audio playback effect of the external device is optimized.

In 410, a delay estimation is performed based on the target delay estimation upper limit, in response to sending the voice signal by the smart rearview mirror to the external device.

After the external device needing to turn off the voice interrupt function turns off the voice interrupt function, the smart rearview mirror performs the delay estimation based on the target delay estimation upper limit in response to sending the voice signal to the external device by the smart rearview mirror, which does not affect the final delay estimation result. When the external device does not need the voice interrupt function, it means that the voice interrupt function does not affect the final delay estimation result, such that the delay estimation is performed based on the target delay estimation upper limit when the smart rearview mirror sends the voice signal to the external device.

In 411, a delay processing is performed on the voice signal based on the delay estimation result.

After the delay estimation is performed according to the target delay estimation upper limit to obtain the delay estimation result, the voice signal transmitted by the smart rearview mirror to the external device is delayed based on the delay estimation result. According to the delay estimation method for a smart rearview mirror according to embodiments of the disclosure, the voice signal obtained after the delay processing is accurate and fast.

The configuration information in the upper limit configuration file and the interruption configuration file according to embodiments of the disclosure may be obtained based on experiences. For example, after more devices are connected and more experiences are accumulated, reasonable target delay estimation upper limits in line with different external devices can be obtained through the experiences. That is, by flexibly configuring the target delay estimation upper limits for the external devices having different performances, the processing effect of the voice signal can be improved without affecting the performance of the external device.

With the delay estimation method for a smart rearview mirror according to embodiments of the disclosure, the identification information of the external device is obtained in response to connecting to the external device by the smart rearview mirror for screen projection. The target delay estimation upper limit corresponding to the external device is obtained based on the identification information. The upper limit configuration file is obtained. A search is performed in the upper limit configuration file based on the identification information. If there is a delay estimation upper limit corresponding to the identification information of the external device in the upper limit configuration file, the delay estimation upper limit corresponding to the identification information of the external device is determined as the target delay estimation upper limit. If there is no delay estimation upper limit corresponding to the identification information of the external device in the upper limit configuration file, the preset delay estimation upper limit is determined as the target delay estimation upper limit corresponding to the external device. The interruption configuration file is obtained. If the interruption configuration file indicates that the external device corresponding to the identification information needs to turn off the voice interrupt function, the voice interrupt function of the external device is turned off. When the smart rearview mirror sends the voice signal to the external device, the delay estimation is performed based on the target delay estimation upper limit. The voice signal sent by the smart rearview mirror to the external device is processed based on the delay estimation result. If the interruption configuration file indicates that the external device corresponding to the identification information does not need to turn off the voice interrupt function, when the smart rearview mirror sends the voice signal to the external device, the delay estimation is performed based on the target delay estimation upper limit. The voice signal sent by the smart rearview mirror to the external device is processed according to the delay estimation result. The delay estimation method according to embodiments of the disclosure achieves determining suitable delay estimation upper limits for different external devices. By determining whether to turn off the voice interrupt function of an external device, for an external device having a poor performance, during the TTS broadcast process, a case that the delay value exceeds the upper limit of the algorithm (such as 2500 ms) due to a complex scene of playing the audio sent from the smart rearview mirror to the external device for screen projection and it is incapability of converging due to serious jitters can be avoided.

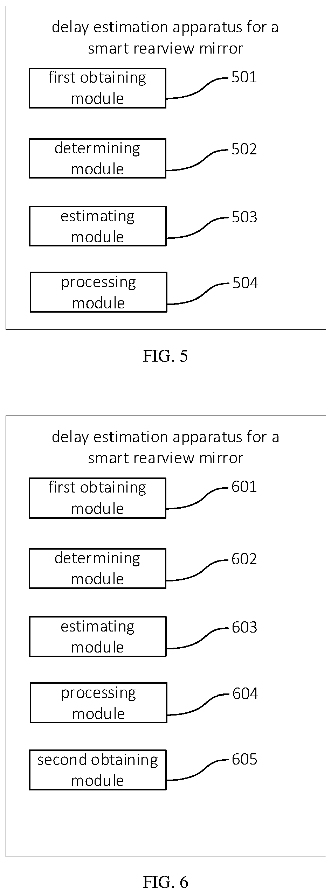

FIG. 5 is a block diagram illustrating a delay estimation apparatus for a smart rearview mirror according to an embodiment of the disclosure. As illustrated in FIG. 5, the delay estimation apparatus includes a first obtaining module 501, a determining module 502, an estimating module 503 and a processing module 504.

The first obtaining module 501 is configured to obtain identification information of an external device in response to connecting by a smart rearview mirror to the external device for screen projection.

The identification information may be a channel number of the external device, or may be other identifiers that can be used to uniquely identify the external device.

The external device can be a vehicle computer system.

The determining module 502 is configured to determine a target delay estimation upper limit corresponding to the external device based on the identification information.

The determining module 502 is further configured to perform a search in an upper limit configuration file based on the identification information. The upper limit configuration file includes a correspondence between identification information and delay estimation upper limits. The determining module 502 is further configured to determine whether there is a delay estimation upper limit corresponding to the identification information of the external device in the upper limit configuration file; in response to that there is a delay estimation upper limit corresponding to the identification information of the external device in the upper limit configuration file, determine the delay estimation upper limit corresponding to the identification information of the external device as the target delay estimation upper limit; and in response to that there is no delay estimation upper limit corresponding to the identification information of the external device in the upper limit configuration file, determine a preset delay estimation upper limit as the target delay estimation upper limit corresponding to the external device.

The estimating module 503 is configured to perform the delay estimation based on the target delay estimation upper limit in response to sending a voice signal by the smart rearview mirror to the external device.

The processing module 504 is configured to perform a delay processing on the voice signal based on the delay estimation result.

As illustrated in FIG. 6, the delay estimation apparatus for a smart rearview mirror may further include a second obtaining module 605. The second obtaining module 605 is configured to, in response to connecting with the external device by the smart rearview mirror for screen projection, send a network request to a server, and receive the interruption configuration file sent by the server based on the network request; or obtain the interruption configuration file from a local storage module of the smart rearview mirror. The blocks 601 to 604 in FIG. 6 have the same function and structure with the blocks 501 to 504 in FIG. 5.

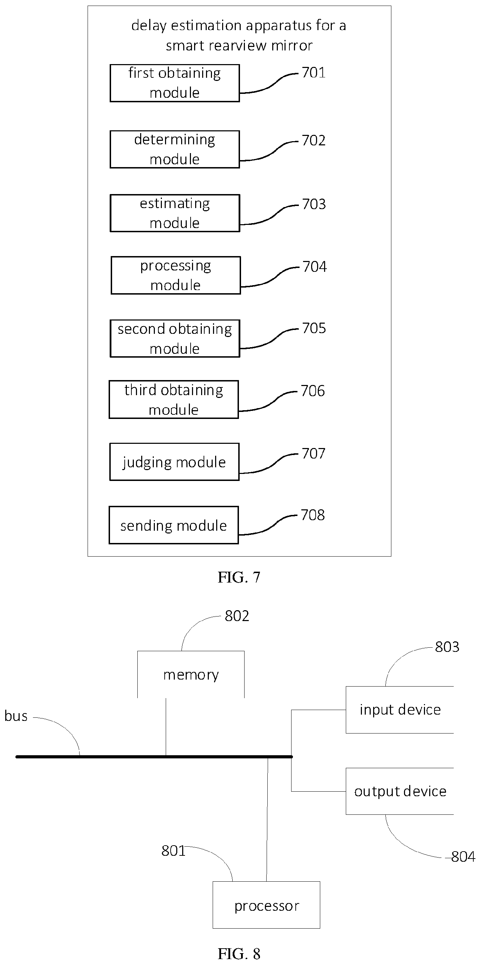

As illustrated in FIG. 7, the delay estimation apparatus for a smart rearview mirror may further include a third obtaining module 706, a judging module 707, and a sending module 708.

The third obtaining module 706 is configured to obtain an interruption configuration file. The interruption configuration file includes a correspondence between the identification information and voice interrupt function configuration information.

The judging module 707 is configured to determine whether to turn off a voice interrupt function of the external device based on the identification information and the interruption configuration file.

The sending module 708 is configured to, in response to determining to turn off the voice interrupt function of the external device, send control information to the external device. The control information is configured to instruct the external device to turn off the voice interrupt function. The blocks 701 to 705 in FIG. 7 have the same function and structure of blocks 601 to 605 in FIG. 6.

Regarding the apparatus in the above embodiments, the specific manner in which each module performs operations has been described in detail in the embodiments of the method, and will not be described in detail here.

With the delay estimation apparatus for a smart rearview mirror according to the embodiments of the disclosure, the first obtaining module obtains the identification information of the external device in response to connecting with the external device by the smart rearview mirror for the screen projection. The determining module is configured to determine the target delay estimation upper limit corresponding to the external device based on the identification information. The estimating module is configured to obtain perform the delay estimation based on the target delay estimation upper limit in response to sending the voice signal by the smart rearview mirror to the external device. The processing module is configured to perform the delay processing to the voice signal based on the delay estimation result. In embodiments of the disclosure, appropriate target delay estimation upper limits are provided for different external devices, and the delay estimation is performed based on the target delay estimation upper limit matching the external device. The delay estimation result obtained by the delay estimattion algorithm is accurate, and the audio playback effect of the external device is improved.

According to embodiments of the disclosure, the disclosure also provides an electronic device, a readable storage medium and a computer program product.

FIG. 8 is a block diagram of an electronic device used to implement the delay estimation method for a smart rearview mirror according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the electronic device includes: one or more processors 801, a memory 802, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 801 is taken as an example in FIG. 8.

The memory 802 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 802 is configured to store non-transitory software programs, non-transitory computer-executable programs and modules, such as program instructions/modules corresponding to the method for estimating a delay of a smart rearview mirror according to the embodiments of the disclosure (for example, the first obtaining module 701, the determining module 702, the estimating module 703, the processing module 704, the second obtaining module 705, the third obtaining module 706, the judging module 707 and the sending module 708 shown in FIG. 7). The processor 801 executes various functional applications and data processing of the server by running the non-transitory software programs, instructions, and modules stored in the memory 802, to implement the method in the above method embodiments.

The memory 802 may include a storage program area and a storage data area, where the storage program area may store an operating system and application programs required for at least one function. The storage data area may store data created according to the use of the electronic device for implementing the method. In addition, the memory 802 may include a high-speed random access memory, and a non-transitory memory, such as at least one magnetic disk storage device, a flash memory device, or other non-transitory solid-state storage device. In some embodiments, the memory 802 may optionally include a memory remotely disposed with respect to the processor 801, and these remote memories may be connected to the electronic device for implementing the method through a network. Examples of the above network include, but are not limited to, the Internet, an intranet, a local area network, a mobile communication network, and combinations thereof.

The electronic device used to implement the delay estimation method for a smart rearview mirror may further include: an input device 803 and an output device 804. The processor 801, the memory 802, the input device 803 and the output device 804 may be connected by a bus or in other ways, and the connection by a bus is taken as an example in FIG. 8.

The input device 803 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 804 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. That is, the disclosure also provides a computer program, when the computer program is executed by a processor, the method for estimating a delay of a smart rearview mirror described in the above embodiments is implemented. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, intermediate computing components, or front-end components. The components of the system may be interconnected by any form or medium of digital data communication (e.g., a communication network). Examples of communication networks include: a local area network (LAN), a wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

## Claims

1. A delay estimation method for a smart rearview mirror, comprising:
obtaining (101; 401) identification information of an external device in response to connecting with the external device by a smart rearview mirror for screen projection;
determining (102) a target delay estimation upper limit corresponding to the external device based on the identification information;
obtaining (103; 410) a delay estimation result by performing a delay estimation based on the target delay estimation upper limit in response to sending a voice signal by the smart rearview mirror to the external device; and
performing (104; 411) a delay processing on the voice signal based on the delay estimation result;
wherein determining (102) the target delay estimation upper limit corresponding to the external device based on the identification information comprises:
searching (201; 302; 403) in an upper limit configuration file based on the identification information, wherein the upper limit configuration file comprises a correspondence between the identification information and delay estimation upper limits;
determining (202; 303; 404) whether there is a delay estimation upper limit corresponding to the identification information of the external device in the upper limit configuration file;
in response to that there is a delay estimation upper limit corresponding to the identification information of the external device in the upper limit configuration file, determining (203; 304; 405) the delay estimation upper limit corresponding to the identification information of the external device as the target delay estimation upper limit; and
in response to that there is no delay estimation upper limit corresponding to the identification information of the external device in the upper limit configuration file, determining (204; 305; 406) a preset delay estimation upper limit as the target delay estimation upper limit corresponding to the external device.

2. The method of claim 1, further comprising:
in response to connecting with the external device by the smart rearview mirror for screen projection, sending a network request to a server, and receiving the upper limit configuration file sent by the server based on the network request; or,
obtaining the upper limit configuration file from a local storage module of the smart rearview mirror, wherein the upper limit configuration file is requested by the smart rearview mirror and sent by the server at a last time.

3. The method of claim 1 or 2, further comprising:
obtaining (407) an interruption configuration file comprising a correspondence between the identification information and voice interrupt function configuration information;
determining (408) whether to turn off a voice interrupt function of the external device based on the identification information and the interruption configuration file; and
in response to determining to turn off the voice interrupt function of the external device, sending (409) control information to the external device, wherein the control information is configured to instruct the external device to turn off the voice interrupt function.

4. The method of claim 3, wherein obtaining (407) the interruption configuration file comprises:
in response to connecting to the external device by the smart rearview mirror for screen projection, sending a network request to a server, and receiving the interruption configuration file sent by the server based on the network request; or,
obtaining the interruption configuration file from a local storage module of the smart rearview mirror.

5. The method of any one of claims 1 to 4, wherein the external device is a vehicle computer system.

6. A delay estimation apparatus for a smart rearview mirror, comprising:
a first obtaining module (501; 601; 701), configured to obtain identification information of an external device in response to connecting to the external device by a smart rearview mirror for screen projection;
a determining module (502; 602; 702), configured to determine a target delay estimation upper limit corresponding to the external device based on the identification information;
an estimating module (503; 603; 703), configured to obtain a delay estimation result by performing delay estimation based on the target delay estimation upper limit, in response to sending a voice signal by the smart rearview mirror to the external device;
and
a processing module (504; 604; 704), configured to perform a delay processing on the voice signal based on the delay estimation result;
wherein that, the determining module (502; 602; 702) is further configured to:
perform a search in an upper limit configuration file based on the identification information, wherein the upper limit configuration file comprises a correspondence between identification information and delay estimation upper limits;
determine whether there is a delay estimation upper limit corresponding to the identification information of the external device in the upper limit configuration file;
in response to determining that there is a delay estimation upper limit corresponding to the identification information of the external device in the upper limit configuration file, determine the delay estimation upper limit corresponding to the identification information of the external device as the target delay estimation upper limit; and
in response to determining that there is no delay estimation upper limit corresponding to the identification information of the external device in the upper limit configuration file, determine a preset delay estimation upper limit as the target delay estimation upper limit corresponding to the external device.

7. The apparatus of claim 6, further comprising:
a second obtaining module (605; 705), configured to send a network request to a service in response to connecting to the external device by the smart rearview mirror for screen projection and receive the upper limit configuration file sent by the server based on the network request; or obtain the upper limit configuration file from a local storage module of the smart rearview mirror, wherein the upper limit configuration file is requested by the smart rearview mirror and sent by the server at a last time.

8. The apparatus of claim 6, further comprising:
a third obtaining module (706), configured to obtain an interruption configuration file comprising an correspondence between the identification information and voice interrupt function configuration information;
a judging module (707), configured to determine whether to turn off a voice interrupt function of the external device based on the identification information and the interruption configuration file; and
a sending module (708), configured to send control information to the external device in response to determining to turn off the voice interrupt function of the external device, wherein the control information is configured to instruct the external device to turn off the voice interrupt function.

9. The apparatus of claim 8, wherein the third obtaining module (706) is further configured to:
send a network request to a server in response to connecting to the external device by the smart rearview mirror for screen projection, and receive the interruption configuration file sent by the server based on the network request; or,
obtain the interruption configuration file from a local storage module of the smart rearview mirror.

10. The apparatus of any one of claims 6 to 9, wherein the external device is a vehicle computer system.

11. A non-transitory computer-readable storage medium storing computer instructions, wherein the computer instructions are configured to cause a computer to execute the method of any one of claims 1 to 5.

12. A computer program product comprising a computer program, wherein when the computer program is executed by a processor, the method of any one of claims 1 to 5 is executed.

## Patentansprüche

1. Verzögerungsschätzungsverfahren für einen intelligenten Rückspiegel, umfassend:
Erhalten (101; 401) von Kennzeichnungsinformationen eines externen Geräts als Reaktion auf das Verbinden mit dem externen Gerät durch einen intelligenten Rückspiegel zur Bildschirmprojektion;
Bestimmen (102) einer Zielverzögerungsschätzungsobergrenze entsprechend dem externen Gerät basierend auf den Kennzeichnungsinformationen;
Erhalten (103; 410) eines Verzögerungsschätzungsergebnisses durch Durchführen einer Verzögerungsschätzung basierend auf der Zielverzögerungsschätzungsobergrenze als Reaktion auf das Senden eines Sprachsignals durch den intelligenten Rückspiegel zu dem externen Gerät;
Durchführen (104; 411) einer Verzögerungsverarbeitung an dem Sprachsignal basierend auf dem Verzögerungsschätzungsergebnis;
wobei
das Bestimmen (102) der Zielverzögerungsschätzungsobergrenze entsprechend dem externen Gerät basierend auf den Kennzeichnungsinformationen Folgendes umfasst:
Suchen (201; 302; 403) in einer Obergrenzenkonfigurationsdatei basierend auf den Kennzeichnungsinformationen, wobei die Obergrenzenkonfigurationsdatei eine Korrespondenz zwischen den Kennzeichnungsinformationen und den Verzögerungsschätzungsobergrenzen umfasst;
Bestimmen (202; 303; 404), ob eine Verzögerungsschätzungsobergrenze entsprechend den Kennzeichnungsinformationen des externen Geräts in der Obergrenzenkonfigurationsdatei vorhanden ist;
als Reaktion darauf, dass eine Verzögerungsschätzungsobergrenze entsprechend den Kennzeichnungsinformationen des externen Geräts in der Obergrenzenkonfigurationsdatei vorhanden ist, Bestimmen (203; 304; 405) der Verzögerungsschätzungsobergrenze entsprechend den Kennzeichnungsinformationen des externen Geräts als die Zielverzögerungsschätzungsobergrenze; und
als Reaktion darauf, dass keine Verzögerungsschätzungsobergrenze entsprechend den Kennzeichnungsinformationen des externen Geräts in der Obergrenzenkonfigurationsdatei vorhanden ist, Bestimmen (204; 305; 406) einer vorab festgelegten Verzögerungsschätzungsobergrenze als die Zielverzögerungsschätzungsobergrenze entsprechend dem externen Gerät,

2. Verfahren nach Anspruch 1, ferner umfassend:
als Reaktion auf das Verbinden mit dem externen Gerät durch den intelligenten Rückspiegel zur Bildschirmprojektion, Senden einer Netzwerkanfrage an einen Server und Empfangen der Obergrenzenkonfigurationsdatei, die von dem Server basierend auf der Netzwerkanfrage gesendet wird; oder
Erhalten der Obergrenzenkonfigurationsdatei von einem lokalen Speichermodul des intelligenten Rückspiegels, wobei die Obergrenzenkonfigurationsdatei von dem intelligenten Rückspiegel angefragt wird und von dem Server zu einem letzten Zeitpunkt gesendet wird.

3. Verfahren nach Anspruch 1 oder 2, ferner umfassend:
Erhalten (407) einer Unterbrechungskonfigurationsdatei, die eine Korrespondenz zwischen den Kennzeichnungsinformationen und Sprachunterbrechungsfunktionskonfigurationsinformation en umfasst;
Bestimmen (408), ob eine Sprachunterbrechungsfunktion des externen Geräts ausgeschaltet wird, basierend auf den Kennzeichnungsinformationen und der Unterbrechungskonfigurationsdatei; und
als Reaktion auf das Bestimmen, die Sprachunterbrechungsfunktion des externen Geräts auszuschalten, Senden (409) von Steuerinformationen zu dem externen Gerät, wobei die Steuerinformationen konfiguriert sind, um das externe Gerät anzuweisen, die Sprachunterbrechungsfunktion auszuschalten.

4. Verfahren nach Anspruch 3, wobei das Erhalten (407) der Unterbrechungskonfigurationsdatei Folgendes umfasst:
als Reaktion auf das Verbinden mit dem externen Gerät durch den intelligenten Rückspiegel zur Bildschirmprojektion, Senden einer Netzwerkanfrage an einen Server, und Empfangen der Unterbrechungskonfigurationsdatei, die von dem Server basierend auf der Netzwerkanfrage gesendet wird; oder Erhalten der Unterbrechungskonfigurationsdatei von einem lokalen Speichermodul des intelligenten Rückspiegels.

5. Verfahren nach einem der Ansprüche 1 bis 4, wobei das externe Gerät ein Fahrzeugcomputersystem ist.

6. Verzögerungsschätzungsvorrichtung für einen intelligenten Rückspiegel, umfassend:
ein erstes Erhaltungsmodul (501; 601; 701), das konfiguriert ist, um Kennzeichnungsinformationen eines externen Geräts als Reaktion auf das Verbinden mit dem externen Gerät durch einen intelligenten Rückspiegel zur Bildschirmprojektion zu erhalten;
ein Bestimmungsmodul (502; 602; 702), das konfiguriert ist, um eine Zielverzögerungsschätzungsobergrenze entsprechend dem externen Gerät basierend auf den Kennzeichnungsinformationen zu bestimmen;
ein Schätzmodul (503; 603; 703), das konfiguriert ist, um ein Verzögerungsschätzungsergebnis durch Durchführen einer Verzögerungsschätzung basierend auf der Zielverzögerungsschätzungsobergrenze als Reaktion auf das Senden eines Sprachsignals durch den intelligenten Rückspiegel zu dem externen Gerät zu erhalten;
ein Verarbeitungsmodul (504; 604; 704), das konfiguriert ist, um eine Verzögerungsverarbeitung an dem Sprachsignal basierend auf dem Verzögerungsschätzungsergebnis durchzuführen;
wobei
das Bestimmungsmodul (502; 602; 702) ferner konfiguriert ist, um:
eine Suche in einer Obergrenzenkonfigurationsdatei basierend auf den Kennzeichnungsinformationen durchzuführen, wobei die Obergrenzenkonfigurationsdatei eine Korrespondenz zwischen Kennzeichnungsinformationen und Verzögerungsschätzungsobergrenzen umfasst;
zu bestimmen, ob eine Verzögerungsschätzungsobergrenze entsprechend den Kennzeichnungsinformationen des externen Geräts in der Obergrenzenkonfigurationsdatei vorhanden ist;
als Reaktion auf das Bestimmen, dass eine Verzögerungsschätzungsobergrenze entsprechend den Kennzeichnungsinformationen des externen Geräts in der Obergrenzenkonfigurationsdatei vorhanden ist, die Verzögerungsschätzungsobergrenze entsprechend den Kennzeichnungsinformationen des externen Geräts als die Zielverzögerungsschätzungsobergrenze zu bestimmen; und
als Reaktion auf das Bestimmen, dass keine Verzögerungsschätzungsobergrenze entsprechend den Kennzeichnungsinformationen des externen Geräts in der Obergrenzenkonfigurationsdatei vorhanden ist, eine vorab festgelegte Verzögerungsschätzungsobergrenze als die Zielverzögerungsschätzungsobergrenze entsprechend dem externen Gerät zu bestimmen.

7. Vorrichtung nach Anspruch 6, ferner umfassend:
ein zweites Erhaltungsmodul (605; 705), das konfiguriert ist, um eine Netzwerkanfrage an einen Server als Reaktion auf das Verbinden mit dem externen Gerät durch den intelligenten Rückspiegel zur Bildschirmprojektion zu senden und die Obergrenzenkonfigurationsdatei zu empfangen, die von dem Server basierend auf der Netzwerkanfrage gesendet wird; oder die Obergrenzenkonfigurationsdatei von einem lokalen Speichermodul des intelligenten Rückspiegels zu erhalten, wobei die Obergrenzenkonfigurationsdatei von dem intelligenten Rückspiegel angefragt wird und von dem Server zu einem letzten Zeitpunkt gesendet wird.

8. Vorrichtung nach Anspruch 6, ferner umfassend:
ein drittes Erhaltungsmodul (706), das konfiguriert ist, um eine Unterbrechungskonfigurationsdatei zu erhalten, die eine Korrespondenz zwischen den Kennzeichnungsinformationen und Sprachunterbrechungsfunktionskonfigurationsinformation en umfasst;
ein Beurteilungsmodul (707), das konfiguriert ist, um basierend auf den Kennzeichnungsinformationen und der Unterbrechungskonfigurationsdatei zu bestimmen, ob eine Sprachunterbrechungsfunktion des externen Geräts ausgeschaltet wird; und
ein Sendemodul (708), das konfiguriert ist, um Steuerinformationen zu dem externen Gerät als Reaktion auf das Bestimmen, die Sprachunterbrechungsfunktion des externen Geräts auszuschalten, zu senden, wobei die Steuerinformationen konfiguriert sind, um das externe Gerät anzuweisen, die Sprachunterbrechungsfunktion auszuschalten.

9. Vorrichtung nach Anspruch 8, wobei das dritte Erhaltungsmodul (706) ferner konfiguriert ist, um:
eine Netzwerkanfrage zu einem Server als Reaktion auf das Verbinden mit dem externen Gerät durch den intelligenten Rückspiegel zur Bildschirmprojektion zu senden und die Unterbrechungskonfigurationsdatei zu empfangen, die von dem Server basierend auf der Netzwerkanfrage gesendet wird; oder
die Unterbrechungskonfigurationsdatei von einem lokalen Speichermodul des intelligenten Rückspiegels zu erhalten.

10. Vorrichtung nach einem der Ansprüche 6 bis 9, wobei das externe Gerät ein Fahrzeugcomputersystem ist.

11. Nichtflüchtiges computerlesbares Speichermedium, das Computeranweisungen speichert, wobei die Computeranweisungen konfiguriert sind, um zu bewirken, dass ein Computer das Verfahren nach einem der Ansprüche 1 bis 5 ausführt.

12. Computerprogrammprodukt umfassend ein Computerprogramm, wobei, wenn das Computerprogram von einem Prozessor ausgeführt wird, das Verfahren nach einem der Ansprüche 1 bis 5 ausgeführt wird.

## Revendications

1. Procédé d'estimation de délai pour un rétroviseur intelligent, comprenant :
l'obtention (101 ; 401) d'informations d'identification d'un dispositif externe en réponse à la connexion au dispositif externe par un rétroviseur intelligent pour une projection d'écran ;
la détermination (102) d'une limite supérieure d'estimation de délai cible correspondant au dispositif externe sur la base des informations d'identification ;
l'obtention (103 ; 410) d'un résultat d'estimation de délai par la réalisation d'une estimation de délai sur la base de la limite supérieure d'estimation de délai cible en réponse à l'envoi d'un signal vocal par le rétroviseur intelligent au dispositif externe ; et
la réalisation (104 ; 411) d'un traitement de délai sur le signal vocal sur la base du résultat d'estimation de délai ;
dans lequel la détermination (102) de la limite supérieure d'estimation de délai cible correspondant au dispositif externe sur la base des informations d'identification comprend :
la recherche (201 ; 302 ; 403) dans un fichier de configuration de limite supérieure sur la base des informations d'identification, dans lequel le fichier de configuration de limite supérieure comprend une correspondance entre les informations d'identification et des limites supérieures d'estimation de délai ;
la détermination (202 ; 303 ; 404) s'il y a ou non une limite supérieure d'estimation de délai correspondant aux informations d'identification du dispositif externe dans le fichier de configuration de limite supérieure ;
en réponse à la présence d'une limite supérieure d'estimation de délai correspondant aux informations d'identification du dispositif externe dans le fichier de configuration de limite supérieure, la détermination (203 ; 304 ; 405) de la limite supérieure d'estimation de délai correspondant aux informations d'identification du dispositif externe en tant que la limite supérieure d'estimation de délai cible ; et
en réponse à l'absence d'une limite supérieure d'estimation de délai correspondant aux informations d'identification du dispositif externe dans le fichier de configuration de limite supérieure, la détermination (204 ; 305 ; 406) d'une limite supérieure d'estimation de délai prédéfinie en tant que la limite supérieure d'estimation de délai cible correspondant au dispositif externe.

2. Procédé selon la revendication 1, comprenant en outre :
en réponse à la connexion au dispositif externe par le rétroviseur intelligent pour une projection d'écran, l'envoi d'une demande de réseau à un serveur, et la réception du fichier de configuration de limite supérieure envoyé par le serveur sur la base de la demande de réseau ; ou
l'obtention du fichier de configuration de limite supérieure depuis un module de stockage local du rétroviseur intelligent, dans lequel le fichier de configuration de limite supérieure est demandé par le rétroviseur intelligent et envoyé par le serveur à un dernier temps.

3. Procédé selon la revendication 1 ou 2, comprenant en outre :
l'obtention (407) d'un fichier de configuration d'interruption comprenant une correspondance entre les informations d'identification et des informations de configuration de fonction d'interruption vocale ;
la détermination (408) s'il faut ou non désactiver une fonction d'interruption vocale du dispositif externe sur la base des informations d'identification et du fichier de configuration d'interruption ; et
en réponse à la détermination qu'il faut désactiver la fonction d'interruption vocale du dispositif externe, l'envoi (409) d'informations de commande au dispositif externe, dans lequel les informations de commande sont configurées pour instruire au dispositif externe de désactiver la fonction d'interruption vocale.

4. Procédé selon la revendication 3, dans lequel l'obtention (407) du fichier de configuration d'interruption comprend :
en réponse à la connexion au dispositif externe par le rétroviseur intelligent pour une projection d'écran, l'envoi d'une demande de réseau à un serveur, et la réception du fichier de configuration d'interruption envoyé par le serveur sur la base de la demande de réseau ; ou
l'obtention du fichier de configuration d'interruption depuis un module de stockage local du rétroviseur intelligent.

5. Procédé selon l'une quelconque des revendications 1 à 4, dans lequel le dispositif externe est un système informatique de véhicule.

6. Appareil d'estimation de délai pour un rétroviseur intelligent, comprenant :
un premier module d'obtention (501 ; 601 ; 701), configuré pour obtenir des informations d'identification d'un dispositif externe en réponse à la connexion au dispositif externe par un rétroviseur intelligent pour une projection d'écran ;
un module de détermination (502 ; 602 ; 702), configuré pour déterminer une limite supérieure d'estimation de délai cible correspondant au dispositif externe sur la base des informations d'identification ;
un module d'estimation (503 ; 603 ; 703), configuré pour obtenir un résultat d'estimation de délai par la réalisation d'une estimation de délai sur la base de la limite supérieure d'estimation de délai cible en réponse à l'envoi d'un signal vocal par le rétroviseur intelligent au dispositif externe ; et
un module de traitement (504 ; 604 ; 704), configuré pour réaliser un traitement de délai sur le signal vocal sur la base du résultat d'estimation de délai ;
dans lequel le module de détermination (502 ; 602 ; 702) est en outre configuré pour :
réaliser une recherche dans un fichier de configuration de limite supérieure sur la base des informations d'identification, dans lequel le fichier de configuration de limite supérieure comprend une correspondance entre des informations d'identification et des limites supérieures d'estimation de délai ;
déterminer s'il y a ou non une limite supérieure d'estimation de délai correspondant aux informations d'identification du dispositif externe dans le fichier de configuration de limite supérieure ;
en réponse à la détermination de la présence d'une limite supérieure d'estimation de délai correspondant aux informations d'identification du dispositif externe dans le fichier de configuration de limite supérieure, déterminer la limite supérieure d'estimation de délai correspondant aux informations d'identification du dispositif externe en tant que la limite supérieure d'estimation de délai cible ; et
en réponse à la détermination de l'absence d'une limite supérieure d'estimation de délai correspondant aux informations d'identification du dispositif externe dans le fichier de configuration de limite supérieure, déterminer une limite supérieure d'estimation de délai prédéfinie en tant que la limite supérieure d'estimation de délai cible correspondant au dispositif externe.

7. Appareil selon la revendication 6, comprenant en outre :
un deuxième module d'obtention (605 ; 705), configuré pour envoyer une demande de réseau à un serveur en réponse à la connexion au dispositif externe par le rétroviseur intelligent pour une projection d'écran et recevoir le fichier de configuration de limite supérieure envoyé par le serveur sur la base de la demande de réseau ; ou obtenir le fichier de configuration de limite supérieure depuis un module de stockage local du rétroviseur intelligent, dans lequel le fichier de configuration de limite supérieure est demandé par le rétroviseur intelligent et envoyé par le serveur à un dernier temps.

8. Appareil selon la revendication 6, comprenant en outre :
un troisième module d'obtention (706), configuré pour obtenir un fichier de configuration d'interruption comprenant une correspondance entre les informations d'identification et des informations de configuration de fonction d'interruption vocale ;
un module de jugement (707), configuré pour déterminer s'il faut ou non désactiver une fonction d'interruption vocale du dispositif externe sur la base des informations d'identification et du fichier de configuration d'interruption ; et
un module d'envoi (708), configuré pour envoyer des informations de commande au dispositif externe en réponse à la détermination qu'il faut désactiver la fonction d'interruption vocale du dispositif externe, dans lequel les informations de commande sont configurées pour instruire au dispositif externe de désactiver la fonction d'interruption vocale.

9. Appareil selon la revendication 8, dans lequel le troisième module d'obtention (706) est en outre configuré pour :
envoyer une demande de réseau à un serveur en réponse à la connexion au dispositif externe par le rétroviseur intelligent pour une projection d'écran, et recevoir le fichier de configuration d'interruption envoyé par le serveur sur la base de la demande de réseau ; ou
obtenir le fichier de configuration d'interruption depuis un module de stockage local du rétroviseur intelligent.

10. Appareil selon l'une quelconque des revendications 6 à 9, dans lequel le dispositif externe est un système informatique de véhicule.

11. Support de stockage non transitoire lisible par ordinateur stockant des instructions informatiques, dans lequel les instructions informatiques sont configurées pour amener un ordinateur à exécuter le procédé selon l'une quelconque des revendications 1 à 5.

12. Produit programme informatique comprenant un programme informatique, dans lequel, lorsque le programme informatique est exécuté par un processeur, le procédé selon l'une quelconque des revendications 1 à 5 est exécuté.
